# EUROPÄISCHE PATENTANMELDUNG

(11) **EP 0 749 727 A1**
(43) Veröffentlichungstag der Anmeldung: **27.12.1996**
(21) Anmeldenummer: 96109362.2
(22) Anmeldetag: 12.06.1996
(51) Int. Cl.: A61C 8/00

(54) **Zahnwurzelimplantat**

(30) Priorität: 24.06.1995 DE 19523038
(71) Anmelder: MERCK PATENT GmbH, 64293 Darmstadt (DE)
(72) Erfinder: Dard, Michael, Dr., 64347 Griesheim (DE); De Witte, Gérard, 26300 Chateauneuf sur Isere (FR); Rouvre, Philippe, 83000 Toulon (FR)

(57) **Zusammenfassung**

Ein Zahnwurzelimplantat besteht aus einem Implantatkörper (1) aus Metall, der nahe seinem unteren, abgerundeten Ende querverlaufende Durchbrechungen (2) aufweist. Der Implantatkörper (1) hat eine sich nach unten verjüngende Form. In seiner Außenfläche (3) sind parallel und im Abstand zueinander Umfangsnuten (4) angeordnet, die an ihrem Nutgrund (5) und am Übergang (6) zu den jeweils benachbarten Außenflächenabschnitten (3a) abgerundet sind.

## Beschreibung

Die Erfindung betrifft ein Zahnwurzelimplantat, bestehend aus einem Implantatkörper aus Metall, der nahe seinem unteren, abgerundeten Ende querverlaufende Durchbrechungen aufweist.

Derartige Zahnwurzelimplantate sind in unterschiedlichen Ausführungsformen bekannt. Der Implantatkorper wird in ein hierfür durch Aufbohren vorbereitetes Zahnfach des Kiefers eingesetzt und dient zur Anbringung von Zahnersatz. Beispielsweise können zwei Implantatkörper eine Zahnbrücke tragen.

Die Form des Implantatkörpers soll so gewählt werden, daß einerseits mit möglichst geringen Eingriffen am Knochen im Bereich des Zahnfachs eine gute Anpassung gewährleistet ist; andererseits soll eine sichere Verankerung des Implantatkörpers im Knochen gewährleistet sein.

Bei den meisten bekannten Zahnwurzelimplantaten wird auf eine wirksame sofortige Verankerung im Kieferknochen Wert gelegt. Zu diesem Zweck sind die Implantatkörper mit verhältnismäßig scharfkantigen Gewindegängen versehen, die ein Einschrauben in den Kieferknochen ermöglichen. Bei dieser Formgestaltung des Implantatkörpers hat sich aber ergeben, daß das Knochengewebe an scharfen Kanten des Implantatkörpers unter der Wirkung der auftretenden Belastungen zurückweicht, so daß die anfängliche feste mechanische Verbindung zwischen dem Implantatkörper und dem Kieferknochen sich im Laufe der Zeit verschlechtert.

Eine glatte Außenform des Implantatkörpers zeigt diese Nachteile zwar nicht; trotz der Durchbrechungen, in die das nachwachsende Knochengewebe eindringt, ist hierbei jedoch keine ausreichend feste Verbindung zu dem Kieferknochen gewährleistet.

Andere bekannte Implantatkörper weisen abgerundete Umfangsnuten auf einer zylindrischen Außenfläche auf. Die Vorbereitung des Zahnfachs hierfür macht es aber erforderlich, verhältnismäßig viel Knochenmaterial zu entfernen.

Aufgabe der Erfindung ist es, ein Zahnwurzelimplantat der eingangs genannten Gattung so auszubilden, daß mit möglichst geringem Aufwand bei der Vorbereitung des Zahnfachs und somit auch möglichst geringem chirurgischem Eingriff eine gute Verankerung des Implantatkörpers im Kieferknochen erreicht wird.

Diese Aufgabe wird erfindungsgemäß dadurch gelöst, daß der Implantatkörper eine sich nach unten verjüngende Form aufweist und daß in seiner Außenfläche parallel und im Abstand zueinander Umfangsnuten angeordnet sind, die an ihrem Nutgrund und am Übergang zu den jeweils benachbarten Außenflächenabschnitten abgerundet sind.

Durch die Anordnung von Umfangsnuten wird gegenüber einer glatten Außenfläche eine so starke Vergrößerung der Außenfläche erreicht, daß damit eine wesentlich verbesserte Verankerung des Zahnwurzelimplantats im Kiefer gewährleistet ist. Erst durch die Kombination dieser durch die Umfangsnuten erzielten Flächenvergrößerung mit der abgerundeten Gestaltung aller Kanten und Übergänge wird erreicht, daß das Knochengewebe einerseits den Nutgrund vollständig ausfüllt und andererseits an den äußeren Kanten auch bei den im Laufe der Zeit einwirkenden Belastungen nicht zurückweicht. In weiterer Kombination mit der sich nach unten verjüngenden Form des Implantatkörpers wird eine besonders gute Anpassung an die natürliche Form des Zahnfachs erreicht, wodurch der für die Vorbereitung des Zahnfachs erforderliche Aufwand wesentlich verringert und insbesondere der chirurgische Eingriff am Knochen auf ein möglichst geringes Maß zurückgeführt wird.

Als eine besonders günstige Verteilung der Umfangsnuten hat sich eine Ausführung erwiesen, bei der die zwischen benachbarten Umfangsnuten liegenden Außenflächenabschnitte breiter als die Umfangsnuten sind. Vorzugsweise sind diese Außenflächenabschnitte angenähert doppelt so breit wie die Umfangsnuten.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:
Fig. 1 den Implantatkörper eines Zahnwurzelimplantats in einer Seitenansicht,
Fig. 2 den Implantatkörper nach Fig. 1 in kleinerem Maßstab und zur Hälfte im Längsschnitt,
Fig. 3 eine Ansicht in Richtung des Pfeiles III in Fig. 2,
Fig. 4 einen in den Implantatkörper nach den Fig. 1 bis 3 einschraubbaren Handhabungskopf,
Fig. 5 eine in den Implantatkörper einschraubbare Abschlußschraube mit flachem Kopf,
Fig. 6 ein an einer Abschlußschraube gemäß Fig. 5 angesetztes Stanzwerkzeug zum Ausstanzen des Zahnfleischs im Bereich des Zahnwurzelimplantats und
Fig. 7 einen in den Implantatkörper einschraubbaren Vernarbungskopf.

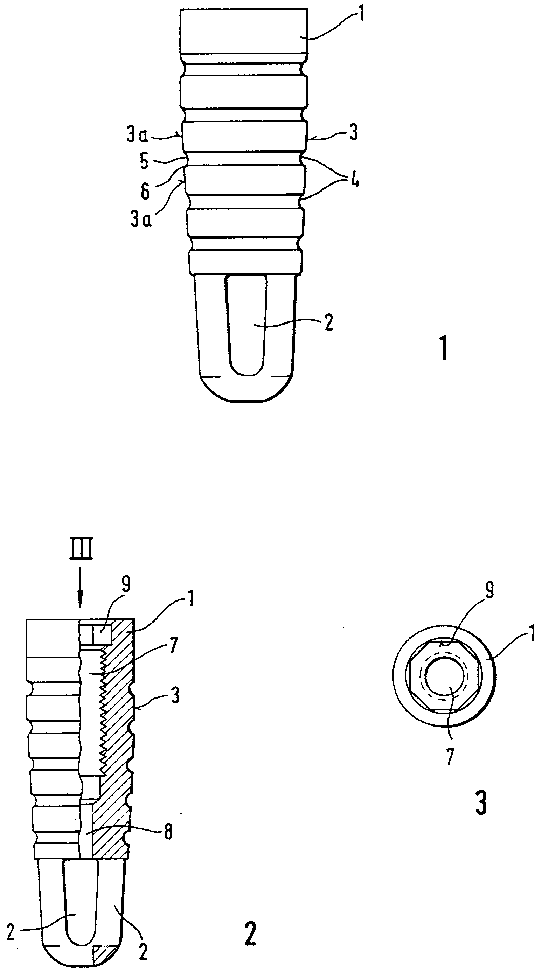

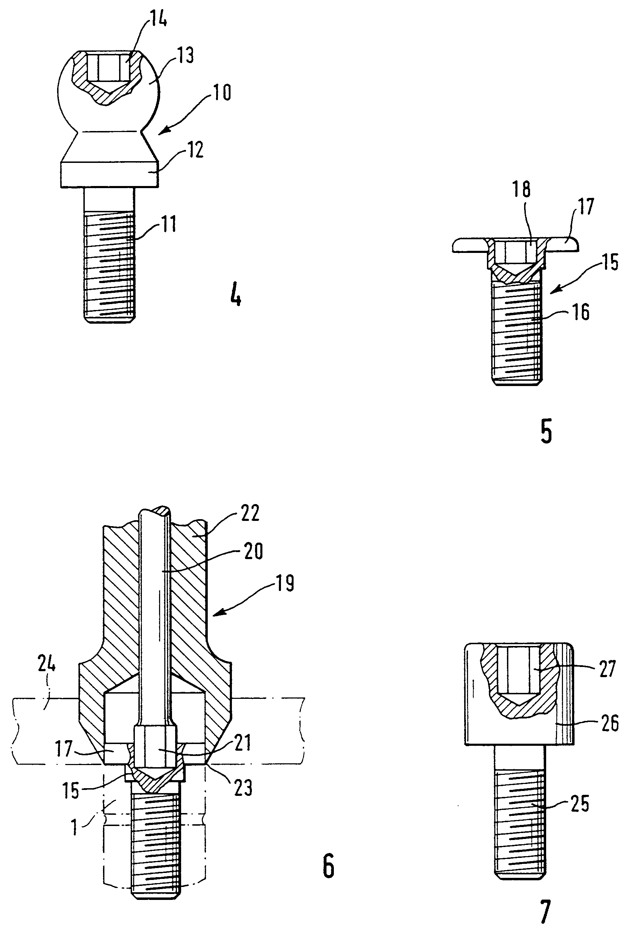

Der in den Fig. 1 bis 3 dargestellte, als Zahnwurzelimplantat dienende Implantatkörper 1, besteht aus Metall, vorzugsweise einer Titanlegierung wie TiAl₆V₄. Er weist eine sich nach unten verjungende Form auf, die dadurch an die Form des aufnehmenden Zahnfachs im Kiefer angepaßt ist.

An seinem unteren, abgerundeten Ende weist der Implantatkörper 1 zwei im rechten Winkel zueinander querverlaufende Durchbrechungen 2 auf, die angenähert in gleichem Maße nach unten verjüngt sind wie der Implantatkörper 1.

In der oberhalb der Durchbrechungen 2 liegenden Außenfläche 3 sind parallel und im Abstand zueinander Umfangsnuten 4 angeordnet. Diese Umfangsnuten 4 sind an ihrem Nutgrund 5 und an ihrem den Übergang zu den jeweils benachbarten Außenflächenabschnitten 3a bildenden Rändern 6 abgerundet. Dadurch entsteht eine insgesamt ohne scharfe Kanten ausgebildete Außenfläche 3 des Implantatkörpers 1, deren Flächenausdehnung jedoch wesentlich größer als die eines glatten verjüngten Körpers vergleichbarer Abmessungen ist. Diese Oberflächenvergrößerung in Kombination mit der verjüngten Form und der konsequenten Vermeidung scharfer Kanten führt zu einer besonders wirksamen und dauerhaften Verbindung mit dem umgebenden Knochengewebe, wenn der Implantatkörper 1 in ein Zahnfach eines Kiefers eingesetzt ist.

Bei dem dargestellten, bevorzugten Ausführungsbeispiel sind die zwischen benachbarten Umfangsnuten 4 liegenden Außenflächenabschnitte 3a breiter als diese Umfangsnuten 4, und zwar vorzugsweise angenähert doppelt so breit wie die Umfangsnuten 4.

Wie in Fig. 2 dargestellt ist, weist der Implantatkörper 1 an seinem oberen, aus dem Kiefer herausragenden Ende eine zentrale Gewindebohrung 7 auf, die bei dem dargestellten Ausführungsbeispiel über eine Bohrung 8 in die Durchbrechungen 2 übergeht. Am äußeren Ende der Gewindebohrung 7 ist die zentrale Bohrung mit einem Innenachtkant 9 versehen.

Zur Handhabung des Implantatkörpers 1 insbesondere beim Einsetzen in den Kiefer, aber auch zum Entfernen aus dem Kiefer, ist der in Fig. 4 dargestellte Handhabungskopf 10 vorgesehen. Dieser weist einen in die Gewindebohrung 7 einschraubbaren Gewindezapfen 11 auf, an den sich über ein Zwischenstück 12 ein Kugelkopf 13 anschließt, der an seinem oberen Ende mit einem Innensechskant 14 zum Ansatz eines Schraubendrehers versehen ist. Der Kugelkopf 13 ermöglicht mit einem hieran angepaßten Haltewerkzeug die Handhabung des Implantatkörpers 1 in jeder Winkellage.

Nachdem der Implantatkörper 1 mittels des Handhabungskopfes 10 in ein vorher vorbereitetes Zahnfach eingesetzt wurde, wird er mittels einer Abschlußschraube 15, wie sie in Fig. 5 dargestellt ist, verschlossen. Die Abschlußschraube 15 weist einen Gewindezapfen 16 und einen flachen Kopf 17 auf, der angenähert den gleichen Außendurchmesser wie das obere Ende des Implantatkörpers 1 besitzt. Ein zentraler Innensechskant 18 dient auch hierbei als Ansatz für einen Schraubendreher, um die Abschlußschraube in den Implantatkörper 1 einzuschrauben.

Nachdem der Implantatkörper 1 im Kiefer eingewachsen und das Zahnfleisch über dem flachen Kopf 17 der Abschlußschraube 15 vernarbt ist, wird das in Fig. 6 im Längsschnitt dargestellte Stanzwerkzeug 19 angesetzt. Der Innensechskant 18 der Abschlußschraube 15 bildet eine zentrale Ansatzöffnung zur Aufnahme eines Zentrier- und Führungsstiftes 20, der an seinem unteren Ende einen passenden Außensechskant 21 aufweist. Ein Lochstempel 22 ist längs des Zentrier- und Führungsstiftes 20 verschiebbar geführt und weist an seinem unteren Ende eine Ringschneide 23 auf, die in ihrem Durchmesser dem Außendurchmesser des Kopfes 17 der Abschlußschraube 15 entspricht.

Nach dem Ansetzen des Zentrier- und Führungsstiftes 20 an der Abschlußschraube 15 wird mittels des Lochstempels 22 aus dem umgebenden Zahnfleisch 24 ein kreisrundes Loch ausgestanzt, dessen Innendurchmesser angenähert dem Außendurchmesser des Kopfes 17 der Abschlußschraube 15 entspricht. Anschließend wird die Abschlußschraube 15 aus dem Implantatkörper 1 herausgeschraubt und statt dessen die in Fig. 7 dargestellte Schraube mit ihrem Gewindezapfen 25 eingeschraubt, der mit einem Vernarbungskopf 26 versehen ist. Der Vernarbungskopf 26 hat - ebenso wie der Kopf 17 der Abschlußschraube 15 - mindestens angenähert den gleichen Außendurchmesser wie das obere Ende des Implantatkörpers 1. Der Vernarbungskopf 26 ist so hoch, daß er aus dem Zahnfleisch 24 herausragt und bewirkt, daß im Zahnfleisch 24 ein angenähert zylindrisches Loch vernarbt, durch das abschließend ein Zahnersatz am Implantatkörper 1 angeschraubt werden kann. Der Vernarbungskopf 26 weist ebenfalls einen Innensechskant 27 zum Ein- und Ausschrauben auf.

## Patentansprüche

1. Zahnwurzelimplantat, bestehend aus einem Implantatkörper aus Metall, der nahe seinem unteren, abgerundeten Ende querverlaufende Durchbrechungen aufweist, dadurch gekennzeichnet, daß der Implantatkörper (1) eine sich nach unten verjüngende Form aufweist und daß in seiner Außenfläche (3) parallel und im Abstand zueinander Umfangsnuten (4) angeordnet sind, die an ihrem Nutgrund (5) und am Übergang (6) zu den jeweils benachbarten Außenflächenabschnitten (3a) abgerundet sind.

2. Zahnwurzelimplantat nach Anspruch 1, dadurch gekennzeichnet, daß die zwischen benachbarten Umfangsnuten (4) liegenden Außenflächenabschnitte (3a) breiter als die Umfangsnuten (4) sind.

3. Zahnwurzelimplantat nach Anspruch 2, dadurch gekennzeichnet, daß die zwischen benachbarten Umfangsnuten (4) liegenden Außenflächenabschnitte (3a) angenähert doppelt so breit sind wie die Umfangsnuten (4).

4. Zahnwurzelimplantat nach Anspruch 1, dadurch gekennzeichnet, daß die querverlaufende Durchbrechungen (2) angenähert in gleichem Maße nach unten verjüngt sind wie der Implantatkörper (1).

5. Zahnwurzelimplantat nach Anspruch 1, dadurch gekennzeichnet, daß der Implantatkörper (1) an seinem oberen Ende eine zentrale Gewindebohrung (7) aufweist, in die wahlweise ein Handhabungskopf (10), eine Abschlußschraube (15) mit flachem Kopf (17) und ein Vernarbungskopf (26) einschraubbar sind.

6. Zahnwurzelimplantat nach Anspruch 5, dadurch gekennzeichnet, daß der Handhabungskopf (10) einen Kugelkopf (13) aufweist.

7. Zahnwurzelimplantat nach Anspruch 5, dadurch gekennzeichnet, daß die Abschlußschraube (15) eine zentrale Ansatzöffnung (18) zur Aufnahme eines Zentrier- und Führungsstiftes (22) aufweist, an dem ein Lochstempel (22) führbar ist, der eine dem Außendurchmesser des Kopfes (17) der Abschlußschraube (15) entsprechende Ringschneide (23) aufweist.

8. Zahnwurzelimplantat nach Anspruch 5, dadurch gekennzeichnet, daß der Kopf (17) der Abschlußschraube (15) und der Vernarbungskopf (26) mindestens angenähert den gleichen Außendurchmesser wie das obere Ende des Implantatkörpers (1) aufweist.

9. Zahnwurzelimplantat nach Anspruch 5, dadurch gekennzeichnet, daß die zentrale Gewindebohrung (7) mit den querverlaufenden Durchbrechungen (2) in Verbindung steht.
